# EUROPEAN PATENT APPLICATION

(11) **EP 4 527 603 A1**
(43) Date of publication of application: **26.03.2025**
(21) Application number: 24191508.1
(22) Date of filing: 29.07.2024
(51) Int. Cl.: B29C 73/16

(54) **MIXING DEVICE, BOTTLE UNIT, AND PUNCTURE REPAIR KIT**

(30) Priority: 25.09.2023 JP 2023161552
(71) Applicant: SUMITOMO RUBBER INDUSTRIES, LTD., Kobe-shi, Hyogo 651-0072 (JP)
(72) Inventor: NOMURA, KEISUKE, Hyogo, 651-0072 (JP); MAKI, TAKASHI, Hyogo, 651-0072 (JP)
(74) Representative: Forresters IP LLP

(57) **Abstract**

A mixing device 4 includes a mixing chamber 8 having a space for mixing a puncture repair liquid R and compressed air A, a first inlet 9 for supplying the compressed air A to the mixing chamber 8, a second inlet 10 for supplying the puncture repair liquid R to the mixing chamber 8, and an outlet 11 for discharging a mixture of the puncture repair liquid R and the compressed air A from the mixing chamber 8. The second inlet 10 includes a flow path 12 including a first portion 12a which is open at the mixing chamber 8 and a second portion 12b upstream of the first portion 12a. The first portion 12a has a first flow path cross-sectional area S1. The second portion 12b has a second flow path cross-sectional area S2 larger than the first flow path cross-sectional area S1. The flow path 12 includes a step portion 12c which is between the first portion 12a and the second portion 12b and discontinuously changes a flow path cross-sectional area thereof.

## Description

### BACKGROUND OF THE INVENTION

### Field of the Invention

The present invention relates to a mixing device for mixing a puncture repair liquid and compressed air, a bottle unit including the mixing device, and a puncture repair kit including the bottle unit.

### Background Art

Hitherto, a puncture repair kit for repairing an object such as a punctured tire has been known. For example, Japanese Laid-Open Patent Publication No. 2017-056662 proposes a puncture repair kit for repairing a punctured object by sequentially injecting a puncture repair liquid and compressed air into the punctured object using compressed air from a compressor.

However, with the puncture repair kit of Japanese Laid-Open Patent Publication No. 2017-056662, the puncture repair liquid and the compressed air are sequentially injected into the punctured object, and thus the time required for puncture repair tends to be longer, so that there is a demand for further improvement in terms of efficiency of puncture repair.

The present invention has been made in view of the above circumstances, and a main object of the present invention is to provide a mixing device, a bottle unit, and a puncture repair kit that allow a punctured object to be efficiently repaired.

### SUMMARY OF THE INVENTION

The present invention is directed to a mixing device for mixing a puncture repair liquid and compressed air, the mixing device including: a mixing chamber having a space for mixing the puncture repair liquid and the compressed air; a first inlet for supplying the compressed air to the mixing chamber; a second inlet for supplying the puncture repair liquid to the mixing chamber; and an outlet for discharging a mixture of the puncture repair liquid and the compressed air from the mixing chamber, wherein the second inlet includes a flow path including a first portion which is open at the mixing chamber and a second portion upstream of the first portion, the first portion has a first flow path cross-sectional area, the second portion has a second flow path cross-sectional area larger than the first flow path cross-sectional area, and the flow path includes a step portion which is between the first portion and the second portion and discontinuously changes a flow path cross-sectional area thereof.

As a result of having the above-described configuration, the mixing device of the present invention allows a punctured object to be efficiently repaired.

### BRIEF DESCRIPTION OF THE DRAWINGS

FIG. 1 is a cross-sectional view showing one embodiment of a puncture repair kit of the present invention;
FIG. 2 is a partial cross-sectional perspective view of a mixing device;
FIG. 3 is a plan view of the mixing device;
FIG. 4 is a plan view of a mixing device of a second embodiment;
FIG. 5 is a partial cross-sectional perspective view of a mixing device of a third embodiment;
FIG. 6 is a plan view of a mixing device of a fourth embodiment; and
FIG. 7 is a plan view of a mixing device of a fifth embodiment.

### DETAILED DESCRIPTION

Hereinafter, an embodiment of the present invention will be described in detail with reference to the drawings.

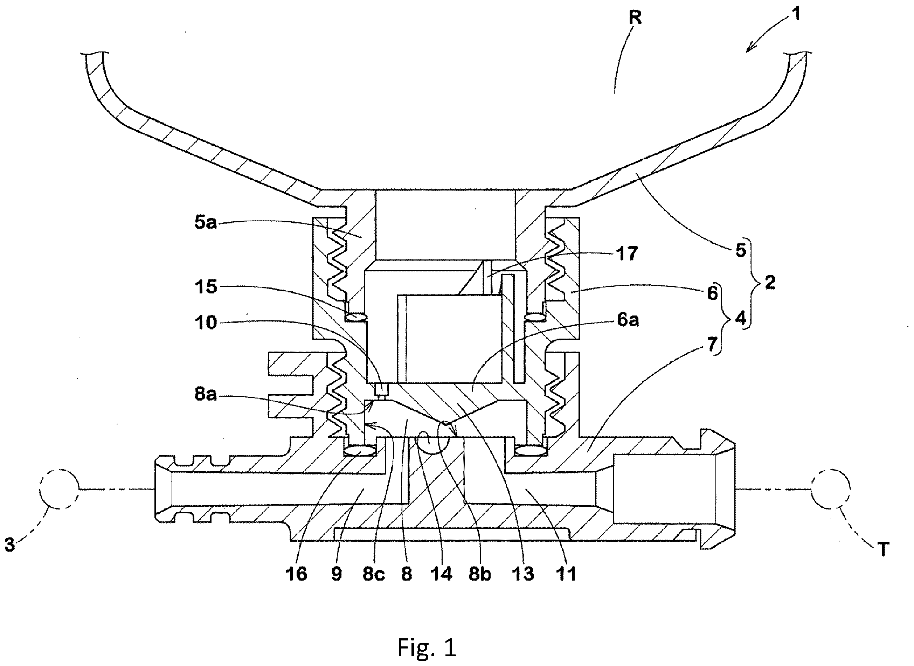

FIG. 1 is a cross-sectional view showing a puncture repair kit 1 of the present embodiment. As shown in FIG. 1, the puncture repair kit 1 is suitably used, for example, for filling an object T, such as a punctured tire, with a puncture repair liquid R and compressed air A.

The puncture repair kit 1 of the present embodiment includes a bottle unit 2 for discharging a mixture of the puncture repair liquid R and the compressed air A to the object T, and a compressor 3 for supplying the compressed air A. The bottle unit 2 of the present embodiment includes a mixing device 4 for mixing the puncture repair liquid R and the compressed air A, and a container 5 for containing the puncture repair liquid R. The mixing device 4 includes, for example, an adapter member 6 attached to the container 5 and a cap member 7 attached to the adapter member 6.

In such a bottle unit 2, it is easy to attach the mixing device 4 and the container 5 to each other, so that the bottle unit 2 serves to shorten the time required for puncture repair. In addition, the mixing device 4 can mix the puncture repair liquid R and the compressed air A in advance before filling the object T, thereby shortening the time required for puncture repair. The mixing device 4 is not limited to such a mode, and may be, for example, an integrally molded product in which the adapter member 6 and the cap member 7 are integrated.

The container 5 has, for example, a mouth portion 5a for containing the puncture repair liquid R inside the container 5. The container 5 contains the puncture repair liquid R therein, for example, through the mouth portion 5a. The mouth portion 5a has, for example, a film (not shown) for holding the contained puncture repair liquid R in an airtight manner.

The mixing device 4 is preferably attached to the mouth portion 5a of the container 5. Such a container 5 eliminates the need to form a separate outlet for the puncture repair liquid R and serves to reduce the production cost.

The mixing device 4 of the present embodiment includes a mixing chamber 8 having a space for mixing the puncture repair liquid R and the compressed air A. The mixing chamber 8 includes, for example, a top surface 8a which is located on an upper side when in use in which the mixing device 4 is attached to the container 5 and puncture repair is performed, a floor surface 8b which is located on a lower side when in use, and a side surface 8c connecting the top surface 8a and the floor surface 8b. The mixing chamber 8 has, for example, a space having a circular column shape in which the top surface 8a and the floor surface 8b are circular.

The mixing device 4 of the present embodiment includes a first inlet 9 for supplying the compressed air A to the mixing chamber 8, and a second inlet 10 for supplying the puncture repair liquid R to the mixing chamber 8. The first inlet 9 communicates, for example, with the compressor 3 which is a compressed air source. The second inlet 10 communicates, for example, with the container 5 containing the puncture repair liquid R.

In such a mixing device 4, the mixing chamber 8 can be repeatedly brought into a positive pressure state and a negative pressure state by pulsation of the compressed air A supplied from the compressor 3, thereby dripping the puncture repair liquid R in the container 5 from the second inlet 10 into the mixing chamber 8 to produce a mixture.

The mixing device 4 preferably includes an outlet 11 for discharging the mixture of the puncture repair liquid R and the compressed air A from the mixing chamber 8. Such a mixing device 4 allows the mixture of the puncture repair liquid R and the compressed air A to be supplied to the object T, so that the time required for puncture repair can be reduced as compared to the case of sequentially supplying the puncture repair liquid R and the compressed air A.

The first inlet 9 and the outlet 11 are provided, for example, in the cap member 7. The first inlet 9 and the outlet 11 of the present embodiment are provided in the floor surface 8b. The second inlet 10 is provided, for example, in a separation wall 6a of the adapter member 6. The second inlet 10 of the present embodiment is provided in the top surface 8a.

Such a mixing device 4 discharges the mixture of the compressed air A and the puncture repair liquid R dripped from the second inlet 10 located on the upper side, through the outlet 11 located on the lower side, and thus can inhibit the dripped puncture repair liquid R from remaining therein, thereby efficiently producing the mixture.

Even with the mixing device 4 in which the outlet 11 is located on the lower side, if the supply amount of the puncture repair liquid R dripped from the second inlet 10 is excessive, the risk of the puncture repair liquid R remaining in the mixing chamber 8 and the outlet 11 increases. Such remaining of the puncture repair liquid R can cause clogging and hinder efficient repair of the punctured object T.

In general, the supply of the puncture repair liquid R can be made gentle by reducing the flow path cross-sectional area of the second inlet 10. On the other hand, forming the second inlet 10 so as to have a small flow path cross-sectional area makes processing difficult, which may increase the production cost, and the risk of the puncture repair liquid R remaining in the second inlet 10 also increases.

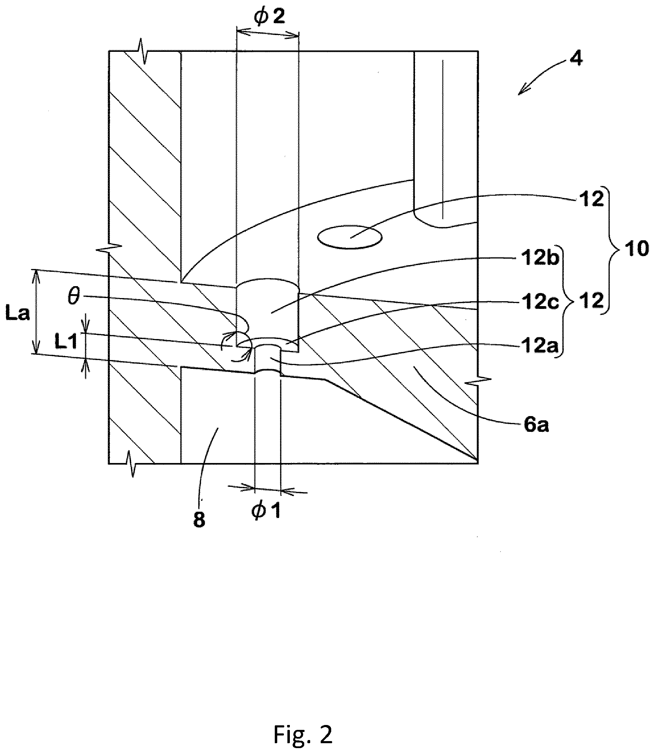

FIG. 2 is a partial cross-sectional perspective view of the mixing device 4. As shown in FIG. 2, the second inlet 10 of the present embodiment includes a flow path 12 including a first portion 12a which is open at the mixing chamber 8 and a second portion 12b upstream of the first portion 12a. The first portion 12a has, for example, a first flow path cross-sectional area S1. The second portion 12b preferably has a second flow path cross-sectional area S2 larger than the first flow path cross-sectional area S1. It is easy to process such a second inlet 10, so that the production cost can be reduced.

The flow path 12 of the present embodiment includes a step portion 12c which is between the first portion 12a and the second portion 12b and discontinuously changes a flow path cross-sectional area thereof. Such a flow path 12 can reduce the flow rate of the puncture repair liquid R by causing a pressure loss in the flow path 12, thereby making the supply of the puncture repair liquid R gentle.

Accordingly, the second inlet 10 can optimize the supply amount of the puncture repair liquid R to the mixing chamber 8 per unit time, thereby inhibiting the puncture repair liquid R from being excessively supplied to the mixing chamber 8 and inhibiting the dripped puncture repair liquid R from remaining. Therefore, the mixing device 4 of the present embodiment allows the punctured object T to be efficiently repaired.

As a more preferable mode, the first portion 12a extends with the first flow path cross-sectional area S1 being constant. The second portion 12b preferably extends with the second flow path cross-sectional area S2 being constant. It is easy to process such a second inlet 10, so that the production cost can be reduced.

The second flow path cross-sectional area S2 is preferably 150% to 300% of the first flow path cross-sectional area S1. When the second flow path cross-sectional area S2 is 150% or more of the first flow path cross-sectional area S1, a pressure loss can be assuredly caused in the flow path 12. When the second flow path cross-sectional area S2 is 300% or less of the first flow path cross-sectional area S1, the puncture repair liquid R can be inhibited from remaining at the step portion 12c, thereby allowing the puncture repair liquid R to be efficiently supplied. From such a viewpoint, the second flow path cross-sectional area S2 is more preferably 180% to 200% of the first flow path cross-sectional area S1.

An angle θ between the outer circumferential surface of the second portion 12b and a step surface of the step portion 12c is preferably 30 to 140°. When the angle θ between the second portion 12b and the step portion 12c is 30° or more, the flow rate of the puncture repair liquid R can be reduced while the puncture repair liquid R is inhibited from remaining at the step portion 12c. When the angle θ between the second portion 12b and the step portion 12c is 140° or less, a pressure loss can be assuredly caused in the flow path 12. From such a viewpoint, the angle θ between the second portion 12b and the step portion 12c is more preferably 45 to 100°.

A flow path length L 1 of the first portion 12a is preferably 10% to 70% of a total length La of the flow path 12. When the flow path length L1 of the first portion 12a is 10% or more of the total length La of the flow path 12, a pressure loss can be caused in the first portion 12a, so that the flow rate of the puncture repair liquid R at the first portion 12a can be reduced. When the flow path length L1 of the first portion 12a is 70% or less of the total length La of the flow path 12, a pressure loss can be assuredly caused at the step portion 12c. From such a viewpoint, the flow path length L1 of the first portion 12a is more preferably 20% to 40% of the total length La of the flow path 12.

The flow path 12 may include, for example, a third portion (not shown), upstream of the second portion 12b, which has a flow path cross-sectional area larger than the second flow path cross-sectional area S2, and the flow path cross-sectional area thereof may change in more steps. In addition, in the mixing device 4, for example, a second separation wall (not shown) may be provided upstream of the separation wall 6a to form the second inlet 10 with multiple steps.

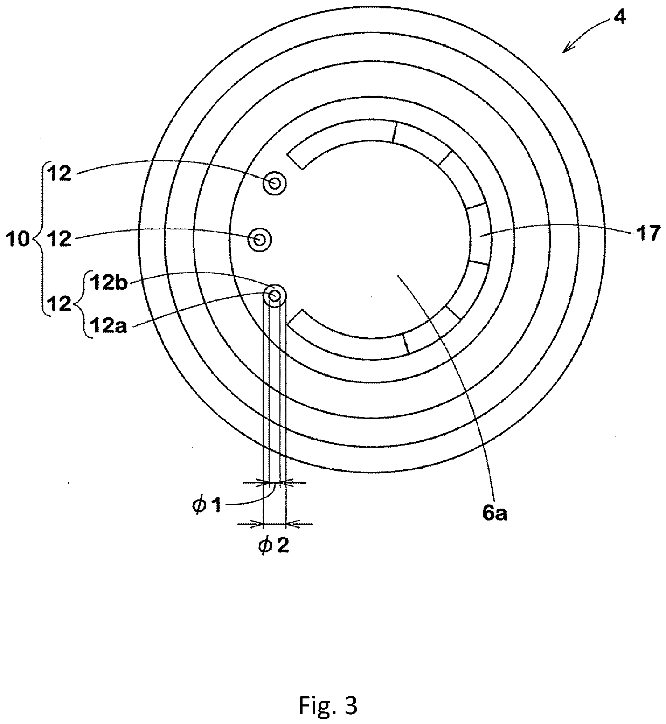

FIG. 3 is a plan view of the mixing device 4. As shown in FIG. 2 and FIG. 3, the second inlet 10 has a plurality of flow paths 12, in the present embodiment, three flow paths 12. Each flow path 12 preferably has a circular transverse cross-section. It is easy to process such a second inlet 10, so that the production cost can be reduced.

A maximum inner diameter ϕ1 of the first portion 12a is preferably 0.5 to 1.0 mm. When the maximum inner diameter ϕ1 of the first portion 12a is 0.5 mm or more, processing is easy, so that such a first portion 12a serves to reduce the production cost. When the maximum inner diameter ϕ1 of the first portion 12a is 1.0 mm or less, such a first portion 12a serves to cause a pressure loss in the flow path 12.

A maximum inner diameter ϕ2 of the second portion 12b is preferably 1.0 to 3.0 mm. When the maximum inner diameter ϕ2 of the second portion 12b is 1.0 mm or more, such a second portion 12b serves to cause a pressure loss in the flow path 12. When the maximum inner diameter ϕ2 of the second portion 12b is 3.0 mm or less, the puncture repair liquid R can be inhibited from remaining at the step portion 12c, thereby allowing the puncture repair liquid R to be efficiently supplied.

As shown in FIG. 1, the mixing chamber 8 may include, for example, a protrusion portion 13 which protrudes from the top surface 8a toward the interior of the mixing chamber 8. For example, a conical shape having a most protruding vertex is suitably adopted for the protrusion portion 13. Such a protrusion portion 13 can provide directivity to the flow inside the mixing chamber 8, thereby allowing the mixture of the puncture repair liquid R and the compressed air A to be efficiently discharged.

The mixing chamber 8 may have, for example, a plurality of hemispherical recesses 14 formed on at least one of the top surface 8a, the floor surface 8b, and the side surface 8c. Such a plurality of recesses 14 serve to make the flow smooth and shorten the residence time of the mixture in the mixing chamber 8.

The adapter member 6 is screwed to both the mouth portion 5a of the container 5 and the cap member 7, for example. The space between the adapter member 6 and the mouth portion 5a is preferably sealed by a sealing member 15. The space between the adapter member 6 and the cap member 7 is sealed, for example, by a sub sealing member 16. Such an adapter member 6 is easily attached to the container 5 and to the cap member 7, and has excellent airtightness after being attached.

As shown in FIG. 1 and FIG. 3, the adapter member 6 has, for example, a breaking portion 17 which breaks the film (not shown) of the mouth portion 5a when the adapter member 6 is attached to the mouth portion 5a of the container 5. The breaking portion 17 is preferably provided in an arc shape in a plan view. Such a breaking portion 17 can break the film of the mouth portion 5a when the mixing device 4 is attached to the container 5, thereby allowing the puncture repair liquid R to be supplied to the mixing chamber 8.

The flow path 12 of the second inlet 10 of the present embodiment is provided on the same circumference as the breaking portion 17 in a plan view. Such a second inlet 10 allows the puncture repair liquid R to be supplied to the vicinity of the side surface 8c of the mixing chamber 8, resulting in excellent dispersibility of the puncture repair liquid R in the mixing chamber 8, and serves to efficiently produce the mixture.

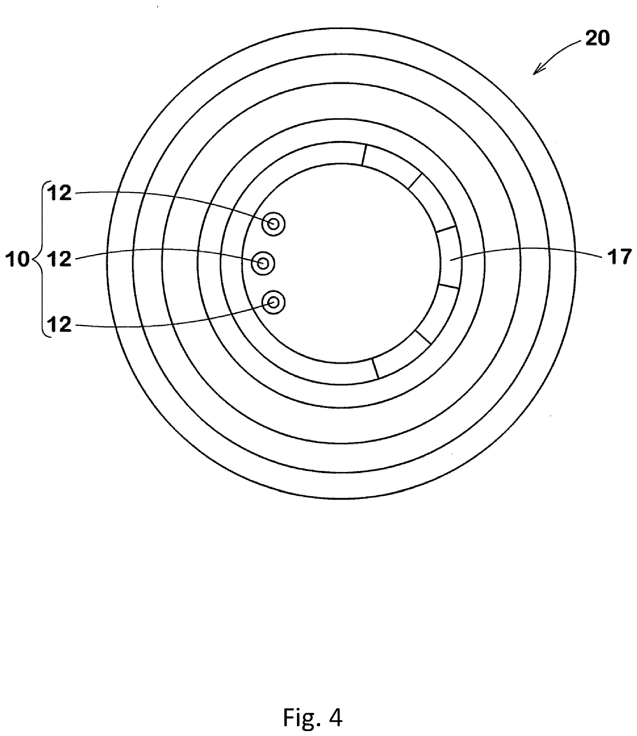

FIG. 4 is a plan view of a mixing device 20 of a second embodiment. The same components as those in the above-described embodiment are designated by the same reference characters, and the description thereof is omitted. As shown in FIG. 4, the flow path 12 of the second inlet 10 may, for example be provided radially inward of the breaking portion 17 in a plan view. Since such a second inlet 10 is located radially inward of the mouth portion 5a (shown in FIG. 1) of the container 5, the puncture repair liquid R in the container 5 can be efficiently supplied to the mixing chamber 8.

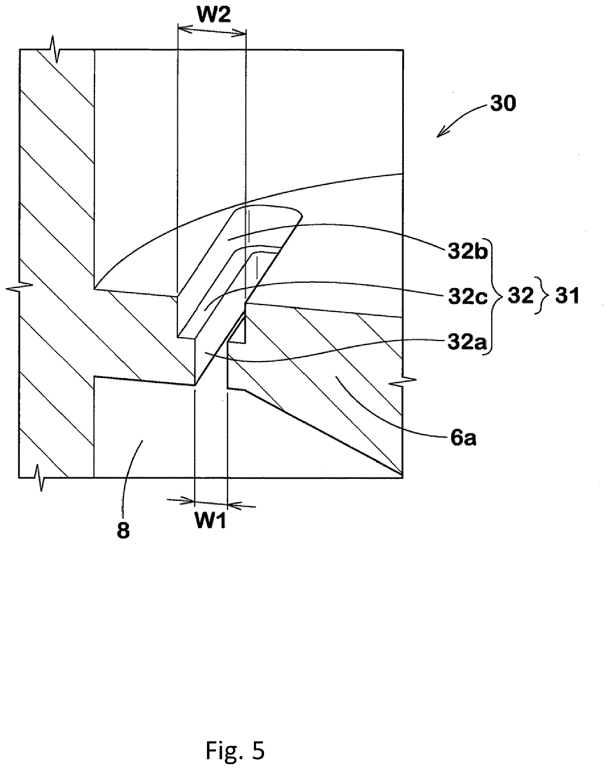

FIG. 5 is a partial cross-sectional perspective view of a mixing device 30 of a third embodiment. The same components as those in the above-described embodiments are designated by the same reference characters, and the description thereof is omitted. As shown in FIG. 5, similar to the above-described mixing device 4, the mixing device 30 of the third embodiment includes a second inlet 31 for supplying the puncture repair liquid R to the mixing chamber 8.

The second inlet 31 has at least one flow path 32, in the third embodiment, one flow path 32. The flow path 32 of the third embodiment is a slit having a transverse cross-section having a longitudinal direction. Such a second inlet 31 can inhibit the flow path 32 from being clogged even if rubber lumps are generated in the puncture repair liquid R in the container 5, thereby allowing the puncture repair liquid R to be efficiently supplied. In addition, the flow path 32 of the third embodiment allows the puncture repair liquid R to be supplied from the slit even when the viscosity of the puncture repair liquid R increases under low temperature conditions.

Similar to the above-described flow path 12, the flow path 32 of the second inlet 31 of the third embodiment includes a first portion 32a which is open at the mixing chamber 8, a second portion 32b upstream of the first portion 32a, and at least one step portion 32c between the first portion 32a and the second portion 32b. Similar to the above-described second portion 12b, a second flow path cross-sectional area S2 of the second portion 32b is preferably larger than a first flow path cross-sectional area S1 of the first portion 32a.

A width W 1 in a direction orthogonal to the longitudinal direction of the first portion 32a of the slit is preferably 0.3 to 1.0 mm. When the width W1 of the first portion 32a is 0.3 mm or more, processing is easy, so that such a slit serves to reduce the production cost. When the width W1 of the first portion 32a is 1.0 mm or less, such a slit serves to cause a pressure loss in the flow path 32.

A width W2 in the direction orthogonal to the longitudinal direction of the second portion 32b of the slit is preferably 1.0 to 1.5 mm. When the width W2 of the second portion 32b is 1.0 mm or more, such a slit serves to cause a pressure loss in the flow path 32. When the width W2 of the second portion 32b is 1.5 mm or less, such a slit can inhibit the puncture repair liquid R from remaining at the step portion 32c, thereby allowing the puncture repair liquid R to be efficiently supplied.

The slit which is the flow path 32 of the third embodiment extends linearly. It is easy to process such a flow path 32, so that the production cost can be reduced.

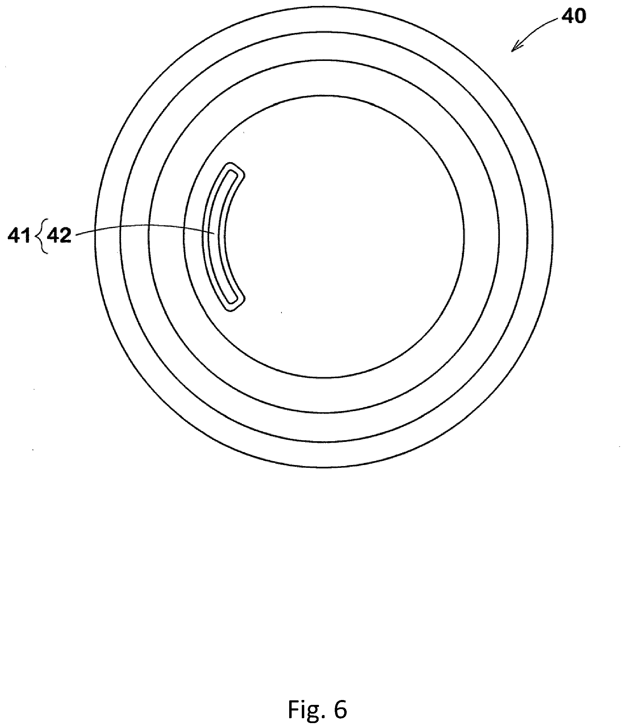

FIG. 6 is a plan view of a mixing device 40 of a fourth embodiment. The same components as those in the above-described embodiments are designated by the same reference characters, and the description thereof is omitted. As shown in FIG. 6, similar to the above-described mixing device 30, the mixing device 40 of the fourth embodiment includes a second inlet 41 for supplying the puncture repair liquid R to the mixing chamber 8 (shown in FIG. 5).

Similar to the above-described second inlet 31, the second inlet 41 of the fourth embodiment has one flow path 42. Similar to the above-described flow path 32, the flow path 42 of the fourth embodiment is a slit having a transverse cross-section having a longitudinal direction. It is easy to process such a second inlet 41, so that the production cost can be reduced.

The slit which is the flow path 42 of the fourth embodiment extends in a curved shape. Such a second inlet 41 allows the puncture repair liquid R to be supplied to the vicinity of the side surface 8c (shown in FIG. 1) of the mixing chamber 8, resulting in excellent dispersibility of the puncture repair liquid R in the mixing chamber 8, and serves to efficiently produce the mixture.

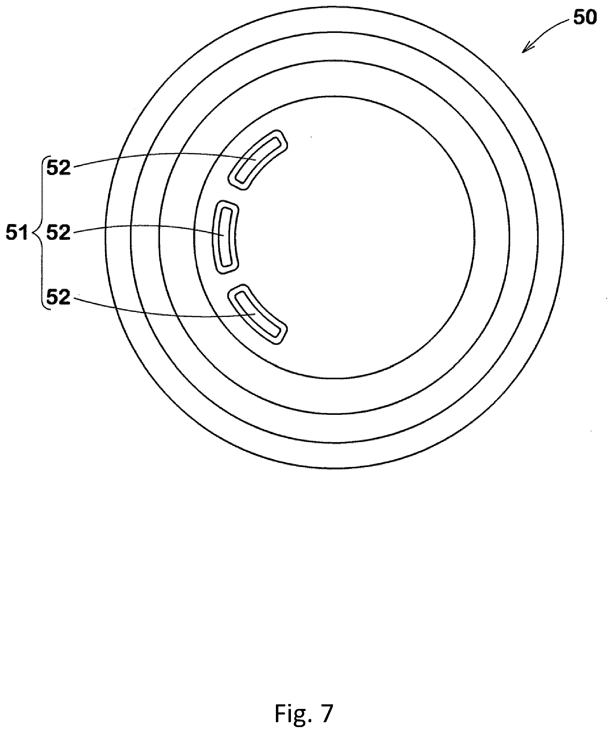

FIG. 7 is a plan view of a mixing device 50 of a fifth embodiment. The same components as those in the above-described embodiments are designated by the same reference characters, and the description thereof is omitted. As shown in FIG. 7, similar to the above-described mixing device 40, the mixing device 50 of the fifth embodiment includes a second inlet 51 for supplying the puncture repair liquid R to the mixing chamber 8 (shown in FIG. 5).

The second inlet 51 has a plurality of flow paths 52, in the fifth embodiment, three flow paths 52. Similar to the above-described flow path 42, each flow path 52 of the fifth embodiment is a slit having a transverse cross-section having a longitudinal direction. It is easy to process such a second inlet 51, so that the production cost can be reduced.

The slit which is each flow path 52 of the fifth embodiment extends in a curved shape. Such a second inlet 51 allows the puncture repair liquid R to be supplied to the vicinity of the side surface 8c (shown in FIG. 1) of the mixing chamber 8, resulting in excellent dispersibility of the puncture repair liquid R in the mixing chamber 8, and serves to efficiently produce the mixture.

Although the particularly preferred embodiments of the present invention have been described in detail above, the present invention is not limited to the above-described embodiments, and various modifications can be made to implement the present invention.

### EXAMPLES

Mixing devices having the basic structure shown in FIG. 1 to FIG. 3 were produced as test mixing devices on the basis of specifications in Table 1. Using the produced test mixing devices, puncture repair liquid supply performance was tested. The test method for supply performance is as follows.

### <Supply Performance>

Each produced test mixing device was attached to a container containing a puncture repair liquid and connected to a compressor, and the supply amount of the puncture repair liquid per unit time when a mixture was discharged was obtained as an average value obtained when 100 measurements were made. The results are indicated as indexes with the result of a comparative example being regarded as 100. A lower value means that the supply of the puncture repair liquid is gentle and the risk of remaining of the puncture repair liquid is reduced.

### The results of the test are shown in Table 1.

**[Table 1]**

| | Comp. Ex. | Ex. 1 | Ex. 2 | Ex. 3 | Ex. 4 |
|---|---|---|---|---|---|
| Maximum inner diameter ϕ1 of first portion (mm) | 0.8 | 0.8 | 0.8 | 0.8 | 0.8 |
| Maximum inner diameter ϕ2 of second portion (mm) | - | 1.5 | 2.0 | 1.5 | 1.5 |
| Flow path length L1 of first portion/ total length La of flow path (%) | 100 | 30 | 30 | 15 | 45 |
| Supply performance (index) | 100 | 60 | 93 | 66 | 90 |

As a result of the test, it is confirmed that the mixing device of each Example has a gentle supply amount of the puncture repair liquid per unit time as compared to the comparative example, thereby reducing the risk of the puncture repair liquid remaining in the mixing chamber and the outlet and allowing a punctured object to be efficiently repaired.

### [Additional Note]

The present invention is as follows.

### [Present Invention 1]

A mixing device for mixing a puncture repair liquid and compressed air, the mixing device including:
a mixing chamber having a space for mixing the puncture repair liquid and the compressed air;
a first inlet for supplying the compressed air to the mixing chamber;
a second inlet for supplying the puncture repair liquid to the mixing chamber; and
an outlet for discharging a mixture of the puncture repair liquid and the compressed air from the mixing chamber, wherein
the second inlet includes a flow path including a first portion which is open at the mixing chamber and a second portion upstream of the first portion,
the first portion has a first flow path cross-sectional area,
the second portion has a second flow path cross-sectional area larger than the first flow path cross-sectional area, and
the flow path includes a step portion which is between the first portion and the second portion and discontinuously changes a flow path cross-sectional area thereof.

### [Present Invention 2]

The mixing device according to Present Invention 1, wherein
the first portion extends with the first flow path cross-sectional area being constant, and
the second portion extends with the second flow path cross-sectional area being constant.

### [Present Invention 3]

The mixing device according to Present Invention 1 or 2, wherein the second flow path cross-sectional area is 150% to 300% of the first flow path cross-sectional area.

### [Present Invention 4]

The mixing device according to any one of Present Inventions 1 to 3, wherein the flow path has a circular transverse cross-section.

### [Present Invention 5]

The mixing device according to Present Invention 4, wherein
a maximum inner diameter (ϕ1) of the first portion is 0.5 to 1.0 mm, and
a maximum inner diameter (ϕ2) of the second portion is 1.0 to 3.0 mm.

### [Present Invention 6]

The mixing device according to any one of Present Inventions 1 to 3, wherein the flow path is a slit having a transverse cross-section having a longitudinal direction.

### [Present Invention 7]

The mixing device according to Present Invention 6, wherein the slit extends linearly.

### [Present Invention 8]

The mixing device according to Present Invention 6, wherein the slit extends in a curved shape.

### [Present Invention 9]

The mixing device according to any one of Present Inventions 6 to 8, wherein
a width in a direction orthogonal to the longitudinal direction of the first portion of the slit is 0.3 to 1.0 mm, and
a width in the direction orthogonal to the longitudinal direction of the second portion of the slit is 1.0 to 1.5 mm.

### [Present Invention 10]

The mixing device according to any one of Present Inventions 1 to 9, wherein a flow path length of the first portion is 10% to 70% of a total length of the flow path.

### [Present Invention 11]

A bottle unit including:
the mixing device according to any one of Present Inventions 1 to 10; and
a container containing the puncture repair liquid, wherein
the container has a mouth portion for containing the puncture repair liquid inside the container, and
the mixing device is attached to the mouth portion.

### [Present Invention 12]

A puncture repair kit including:
the bottle unit according to Present Invention 11; and
a compressor for supplying the compressed air.

## Claims

1. A mixing device (4, 20, 30, 40, 50) for mixing a puncture repair liquid (R) and compressed air (A), the mixing device (4, 20, 30, 40, 50) comprising:
a mixing chamber (8) having a space for mixing the puncture repair liquid (R) and the compressed air (A);
a first inlet (9) for supplying the compressed air (A) to the mixing chamber (8);
a second inlet (10, 31, 41, 51) for supplying the puncture repair liquid (R) to the mixing chamber (8); and
an outlet (11) for discharging a mixture of the puncture repair liquid (R) and the compressed air (A) from the mixing chamber (8), wherein
the second inlet (10, 31, 41, 51) includes a flow path (12, 32, 42, 52) including a first portion (12a, 32a) which is open at the mixing chamber (8) and a second portion (12b, 32b) upstream of the first portion (12a, 32a),
the first portion (12a, 32a) has a first flow path cross-sectional area (S1),
the second portion (12b, 32b) has a second flow path cross-sectional area (S2) larger than the first flow path cross-sectional area (S1), and
the flow path (12, 32, 42, 52) includes a step portion (12c, 32c) which is between the first portion (12a, 32a) and the second portion (12b, 32b) and discontinuously changes a flow path cross-sectional area thereof.

2. The mixing device (4) according to claim 1, wherein
the first portion (12a) extends with the first flow path cross-sectional area (S1) being constant, and
the second portion (12b) extends with the second flow path cross-sectional area (S2) being constant.

3. The mixing device (4) according to claim 1 or 2, wherein the second flow path cross-sectional area (S2) is 150% to 300% of the first flow path cross-sectional area (S1).

4. The mixing device (4) according to any one of claims 1 to 3, wherein the flow path (12) has a circular transverse cross-section.

5. The mixing device (4) according to claim 4, wherein
a maximum inner diameter (ϕ1) of the first portion (12a) is 0.5 to 1.0 mm, and
a maximum inner diameter (ϕ2) of the second portion (12b) is 1.0 to 3.0 mm.

6. The mixing device (30, 40, 50) according to any one of claims 1 to 3, wherein the flow path (32, 42, 52) is a slit having a transverse cross-section having a longitudinal direction.

7. The mixing device (30) according to claim 6, wherein the slit extends linearly.

8. The mixing device (40, 50) according to claim 6, wherein the slit extends in a curved shape.

9. The mixing device (30) according to any one of claims 6 to 8, wherein
a width (W1) in a direction orthogonal to the longitudinal direction of the first portion (32a) of the slit is 0.3 to 1.0 mm, and
a width (W2) in the direction orthogonal to the longitudinal direction of the second portion (32b) of the slit is 1.0 to 1.5 mm.

10. The mixing device (4) according to any one of claims 1 to 9, wherein a flow path length (L1) of the first portion (12a) is 10% to 70% of a total length (La) of the flow path (12).

11. A bottle unit (2) comprising:
the mixing device (4) according to any one of claims 1 to 10; and
a container (5) containing the puncture repair liquid (R), wherein
the container (5) has a mouth portion (5a) for containing the puncture repair liquid (R) inside the container (5), and
the mixing device (4) is attached to the mouth portion (5a).

12. A puncture repair kit (1) comprising:
the bottle unit (2) according to claim 11; and
a compressor (3) for supplying the compressed air (A).
